# EUROPÄISCHE PATENTSCHRIFT

(11) **EP 0 740 085 B1**
(45) Veröffentlichungstag und Bekanntmachung des Hinweises auf die Patenterteilung: **13.09.2000**
(21) Anmeldenummer: 96106311.2
(22) Anmeldetag: 22.04.1996
(51) Int. Cl.: F16D 65/16

(54) **Scheibenbremse**
Disc brake
Frein à disque

(30) Priorität: 24.04.1995 DE 19515019
(43) Veröffentlichungstag der Anmeldung: 30.10.1996
(73) Patentinhaber: PERROT BREMSEN GmbH, 68229 Mannheim (DE)
(72) Erfinder: Antony, Paul, 67550 Worms (DE); Jäger, Hellmut, 68535 Edingen-Neckarhausen (DE); Macke, Wlodzimierz, 68542 Heddesheim (DE); Rupprecht, Bernd, 68535 Edingen-Neckarhausen (DE)
(74) Vertreter: Patentanwälte Leinweber & Zimmermann

(56) Entgegenhaltungen:
- EP-A- 0 012 024
- WO-A-93/21452

## Beschreibung

Die Erfindung betrifft eine Fluiddruck-betätigbare Scheibenbremse mit
a) einem Bremssattel, der mit seinen beiden Sattelschenkeln eine Bremsscheibe und an die Bremsscheibe anlegbare Bremsbacken übergreift,
b) einer Zuspanneinrichtung auf einer Seite der Bremsscheibe mit einer Zuspannwelle, die im wesentlichen parallel zur Hauptebene der Bremsscheibe liegt und sich bremsscheibenabgewandt an dem Bremssattel abstützt, während sie bremsscheibenzugewandt in Wirkverbindung mit einer Bremsbacke steht, wobei sie eine Nockenkontur hat, die bei einem Verdrehen um ihre Längsachse zu einer Relativverschiebung von Bremssattel und Bremsbacke in Axialrichtung der Bremsscheibe führt, und mit einem innerhalb des Bremssattels angeordneten Bremshebel, der sich radial von der Zuspannwelle erstreckt, so daß die Bremse durch Schwenken des Schwenkhebels um eine parallel zur Hauptebene der Bremsscheibe liegende Schwenkachse betätigt wird,
c) einer Betätigungseinrichtung mit einem Fluiddruckzylinder, der abnehmbar an dem Bremssattel angebaut ist und dessen von seinem Betätigungshub herrührender Kraftfluß durch eine Sattelöffnung hindurch den Schwenkhebel betätigt, und
d) einem Koppelglied zwischen dem Fluiddruckzylinder und dem Schwenkhebel.

Scheibenbremsen der vorstehend beschriebenen Art sind bekannt, beispielsweise aus der DE 42 31 560 A1, der DE 43 07 019 A1, der WO 93/22579, der DE 40 32 885 A1 und der WO 93/21452. Dabei weist in aller Regel der Fluiddruckzylinder ein Dichtsystem auf, das beispielsweise von einer Faltenmanschette gebildet wird, wobei sich das Dichtsystem bis in den Befestigungsbereich der Anlageflächen zwischen dem Bremssattel und dem Zylinder erstreckt. Wird der Fluiddruckzylinder an den Bremssattel angebaut, so dient das Dichtsystem zum Abdichten des Sattelinnenraums mit dem darin befindlichen Schwenkhebel einerseits und des Zylinderinnenraums andererseits gegeneinander. Weiterhin soll das Dichtsystem ein äußeres Eindringen von beispielsweise Feuchtigkeit, Schmutz usw. über den erwähnten Befestigungsbereich in den Sattelinnenraum verhindern.

Bisweilen ist es notwendig, den Fluiddruckzylinder von dem Bremssattel abzunehmen. Damit wird bei den eingangs beschriebenen Bremsen auch das etwaig in dem Bremszylinder vorhandene Dichtsystem mit abgebaut, so daß der Innenraum des Bremssattels mit der darin befindlichen Zuspanneinrichtung durch die Sattelöffnung offenliegt. In einem solchen Fall kann Schmutz in den Innenraum eindringen und die Funktion der Bremse beeinträchtigen. Schlimmstenfalls ist ein Totalausfall der Bremse die Folge.

Bisweilen kommt es vor, daß bei den eingangs beschriebenen Bremsen mit Dichtsystem an dem Fluiddruckzylinder selbst bei angebautem Fluiddruckzylinder Undichtigkeiten auftreten, weshalb beispielsweise Feuchtigkeit in den Sattelinnenraum gelangen kann. Dies ist insbesondere dann der Fall, wenn das innere Dichtsystem des Fluiddruckzylinders, das sich bis in den Befestigungsbereich der Anlageflächen zwischen dem Bremssattel und dem Zylinder erstreckt, defekt ist, was von außen nicht erkannt werden kann.

Der Erfindung liegt die Aufgabe zugrunde, eine Bremse der eingangs genannten Art anzugeben, bei der der Innenraum des Bremssattels zuverlässig vor Schmutz, Feuchtigkeit und dgl. geschützt ist, und zwar auch dann, wenn der Fluiddruckzylinder abgebaut ist.

Aus der EP-A-0 012 024 ist eine Scheibenbremse bekannt, bei der eine Dichtung für einen ein Betätigungselement umgebenden Ringraum vorgesehen ist. Die Dichtung ist balgförmig. Sie ist einerseits an dem Betätigungselement und andererseits an dem das Betätigungselement umgebenden Gehäuse befestigt.

Nach einem ersten Aspekt der Erfindung wird die gestellte Aufgabe durch eine Dichtung zum zumindest im Ruhezustand der Bremse wirksamen Abdichten des von dem Schwenkhebel einerseits und dem ihn umgebenden Teil des Bremssattels andererseits gebildeten Ringraumes gelöst, die unabhängig von der Betätigungseinrichtung an dem den Schwenkhebel umgebenden Teil des Bremssattels gehalten ist und im Ruhezustand der Bremse mit einer Anlagedichtfläche an einem Anschlagbereich an dem Schwenkhebel und/oder dem Koppelglied anliegt.

Mit anderen Worten ist erfindungsgemäß eine Abdichtung des die Zuspanneinrichtung enthaltenden Innenraums des Bremssattels vorgesehen, die von dem Fluiddruckzylinder unabhängig ist, d.h. nicht mit dem Fluiddruckzylinder zusammen abgebaut wird, und die eine Dichtung unabhängig von einer gegebenenfalls in dem Fluiddruckzylinder bereits vorgesehenen Dichtung schafft. Dazu ist die erfindungsgemäße Dichtung an einem Teil der Bremse gehalten, das nicht zusammen mit dem Fluiddruckzylinder abgebaut wird.

Die Dichtung kann an beliebiger Stelle gehalten sein. Bevorzugt ist sie am Umfang der Sattelöffnung gehalten. Dadurch ist die Halterung besonders leicht zugänglich, wodurch die Dichtung auf besonders einfache Weise angebracht und abgenommen werden kann.

Dabei kann erfindungsgemäß am Außenrand der Dichtung ein Haltering angebracht sein, der in eine entsprechende Ausnehmung am Umfang der Sattelöffnung eingedrückt ist. Diese Lösung stellt eine weitere Vereinfachung dar.

Die Dichtung erstreckt sich erfindungsgemäß besonders bevorzugt im wesentlichen parallel zur Mittelachse der Sattelöffnung.

Bevorzugt ist die Dichtung an dem Bremssattel befestigt und hat mindestens einen Bereich, der sich in einen Befestigungsbereich erstreckt, in dem der Bremssattel und der Fluiddruckzylinder aneinander befestigt sind, und der zum Abdichten des Befestigungsbereiches dient. Dadurch kann die Dichtung nicht nur zum Abdichten des Bremssattel-Innenraums, sondern auch zum Abdichten des genannten Befestigungsbereichs dienen, wodurch ein Eindringen von Feuchtigkeit, Schmutz usw. über den Kontaktbereich Bremssattel/Pneumatikzylinder zuverlässig verhindert ist.

Dabei kann sich der sich in den Befestigungsbereich erstreckende Bereich der Dichtung in Richtung der Mittelachse der Sattelöffnung und/oder quer dazu erstrecken.

Nach einem besonders bevorzugten Ausführungsbeispiel der Erfindung ist der sich in den Befestigungsbereich erstreckende Bereich bezüglich der Mittelachse der Sattelöffnung versetzt angeordnet.

Um bei der vorstehend beschriebenen versetzten Anordnung einen unrichtigen Anbau der Dichtung zu verhindern, ist bevorzugt eine Einrichtung vorgesehen, die einen Anbau der Dichtung nur in der korrekten Drehwinkelstellung bezüglich der Mittelachse der Sattelöffnung ermöglicht.

Nach einem zweiten Aspekt der Erfindung wird die gestellte Aufgabe durch eine Dichtung zum zumindest im Ruhezustand der Bremse wirksamen Abdichten des von dem Schwenkhebel einerseits und dem ihn umgebenden Teil des Bremssattels andererseits gebildeten Ringraumes gelöst, die unabhängig von der Betätigungseinrichtung gehalten ist und im Ruhezustand der Bremse mit einer Anlagedichtfläche an einem Anschlagbereich an dem Bremssattel anliegt.

Dieser zweite Aspekt der Erfindung stellt eine "mechanische Umkehr" des ersten Aspektes dar. Alle im Zusammenhang mit dem ersten Aspekt beschriebenen Vorteile sind auch mit dem zweiten Aspekt erzielbar.

Bevorzugt ist die Dichtung an dem Schwenkhebel und/oder dem Koppelglied an einer Stelle gehalten, die im Ruhezustand der Bremse nahe an der Sattelöffnung liegt.

Zusätzlich oder alternativ kann erfindungsgemäß vorgesehen sein, daß die Halterung der Dichtung eine Schale aufweist, die an einer entsprechenden Kontur des Schwenkhebels und/oder des Koppelgliedes anliegt. Dadurch wird eine festlegende Halterung der Dichtung an der Innenbegrenzung des Ringraumes erreicht, ohne daß die Dichtung befestigt werden müßte. Die Montage und Demontage wird dadurch vereinfacht.

Die Dichtung kann aus einem beliebigen Material sein, solange das Material überhaupt zum Dichten geeignet ist. Bevorzugt weist die Dichtung aber ein elastisches Material auf, wodurch sie angesichts der beim Bremsen auftretenden Bewegungen zur flexiblen Anpassung fähig ist.

Bevorzugt weist die Dichtung einen Rollbalg oder eine Faltenmanschette auf. Dadurch kann sie in entspanntem Zustand minimalen Bauraum einnehmen.

Dabei ist es erfindungsgemäß bevorzugt, daß sich die Dichtung nach außerhalb erstreckt, wenn die Zuspanneinrichtung nicht betätigt ist. Diese Ausgestaltung hat wiederum den Vorteil, daß zumindest im Ruhezustand der Bremse keine Einbuchtungen innerhalb des Bremssattel-Innenraumes vorhanden sind, in denen sich bei nicht angebautem Zylinder Schmutz, Feuchtigkeit oder dgl. ablagern könnte.

Als mechanisch vorteilhaft wird bevorzugt, daß die Längsachse des Koppelgliedes und die Mittelachse der Sattelöffnung im wesentlichen parallel zueinander liegen und im gesamten Schwenkbereich des Schwenkhebels annähernd senkrecht auf dem Schwenkhebel stehen.

Schließlich ist es erfindungsgemäß bevorzugt, daß die Anlagedichtfläche bezüglich der Mittelachse der Sattelöffnung versetzt angeordnet ist. Dadurch wird den mechanischen Gegebenheiten im Hinblick auf das Verschwenken des Schwenkhebels Rechnung getragen.

Nachstehend ist die Erfindung anhand bevorzugter Ausführungsbeispiele unter Bezugnahme auf die beiliegende Zeichnung mit weiteren Einzelheiten näher erläutert. Dabei zeigen
Fig. 1 eine geschnittenen Seitenansicht einer Bremse,
Fig. 2 eine senkrecht zu dem Schnitt nach Fig. 1 geschnittene Ansicht der Bremse nach Fig. 1,
Fig. 3 eine Ansicht der Bremse nach Fig. 1, und zwar auf die Ebene "S",
Fig. 4a, 4b geschnittene Teilansichten einer zweiten Bremse,
Fig. 5a, 5b geschnittene Teilansichten einer dritten Bremse,
Fig. 6a, 6b geschnittene Teilansichten einer vierten Bremse,
Fig. 7 eine geschnittene Seitenansicht einer fünften Bremse,
Fig. 8a, 8b geschnittene Teilansichten einer sechsten Bremse,
Fig. 9a, 9b geschnittene Teilansichten einer siebten Bremse,
Fig.10 eine geschnittene Seitenansicht einer Bremse nach einem Ausführungsbeispiel der Erfindung und
Fig.11 eine geschnittene Seitenansicht einer Bremse nach einem weiteren Ausführungsbeispiel der Erfindung.

In den Figuren ist eine pneumatisch betätigte Gleitsattel-Scheibenbremse gezeigt. Sie weist einen Bremssattel 1 auf, der in üblicher Weise mit seinen beiden Schenkeln eine Bremsscheibe 2 übergreift. Beidseitig der Bremsscheibe sind Bremsbacken 3, 4 in einem nicht gezeigten Bremsenträger bzw. im Bremssattel 1 geführt und abgestützt, und der Bremssattel 1 ist in nicht dargestellter Weise mittels Führungsmitteln quer zur Bremsscheibe 2 verschieblich gelagert. Der Bremssattel 1 ist einseitig mit einer Zuspanneinrichtung 5 ausgestattet.

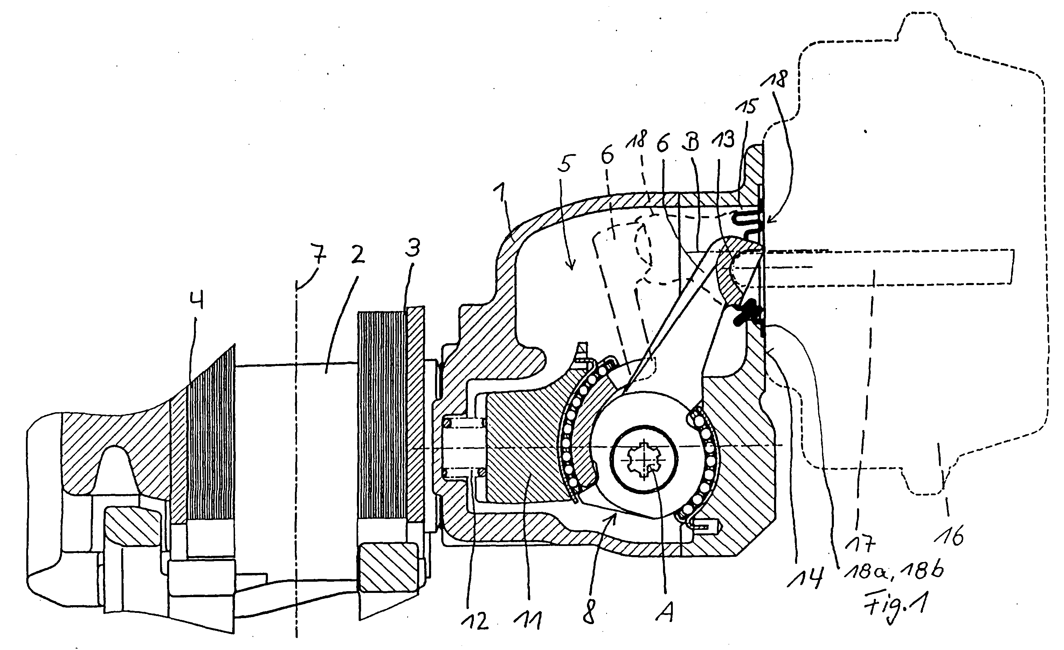

Die Zuspanneinrichtung 5 weist einen Schwenkhebel 6 auf, dessen Schwenkachse A im wesentlichen parallel zur Hauptebene 7 der Bremsscheibe 2 liegt. Bei der in der Figur 1 dargestellten Bremse liegt die Schwenkachse A des Schwenkhebels 6 fest. Die Erfindung ist aber nicht auf dieses Ausführungsbeispiel beschränkt. Vielmehr kann sie auch bei Bremsen Anwendung finden, bei denen die Schwenkachse des Bremshebels ihre Lage mit zunehmender Zuspannung ändert. Der Bremshebel 6 ist radial an einer Zuspannwelle 8 angebracht. Der Bremshebel 6 und die Zuspannwelle 8 liegen innerhalb des Bremssattels 1.

Die Zuspannwelle 8 erstreckt sich entlang der Schwenkachse A und weist eine Nockenkontur auf, die bei einem Verdrehen um ihre Längsachse zu einer Relativverschiebung des Bremssattels 1 und der Bremsbacke 3 in Axialrichtung der Bremsscheibe 2 führt. Dabei wird die Kraft von der Zuspannwelle 8 über vorgelagerte Druckspindeln 9, 10 auf die Bremsbacke 3 übertragen.

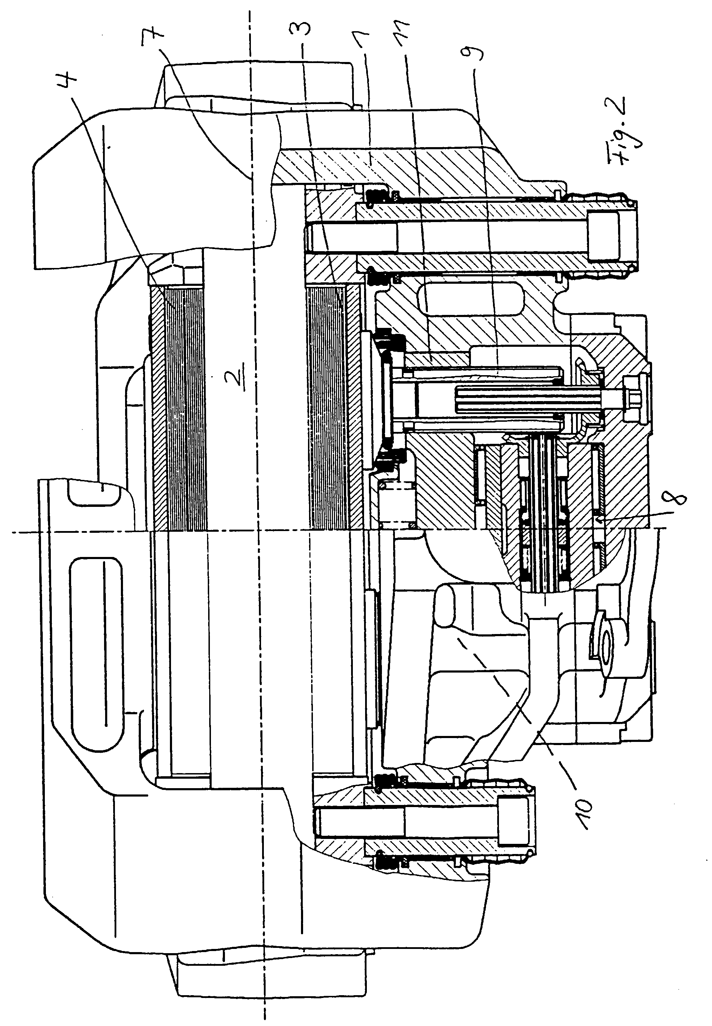

Gemäß Fig. 2 sind bei dieser Ausführung zwei Spindeln 9 und 10 vorgesehen, die in einem Druckstück 11 angeordnet sind. Wiederum gilt aber, daß die Erfindung nicht auf diese Ausführungsform beschränkt ist. Vielmehr ist sie auch anwendbar bei einer mittig im Druckstück angeordneten einzelnen Spindel, wie auch bei Ein- oder Zwei-Spindelbremsen, bei denen gar kein Druckstück vorgesehen ist, weil die nachstellbaren Spindeln im Bremssattel 1 gelagert sind.

Die Zuspanneinrichtung 5 weist bremsscheibenseitig mindestens eine Druckfeder 13 auf, die gegenüber dem Bremssattel 1 abgestützt ist, um die Zuspanneinrichtung 5 mit dem Schwenkhebel 6 in Richtung einer Ruhelage vorzuspannen.

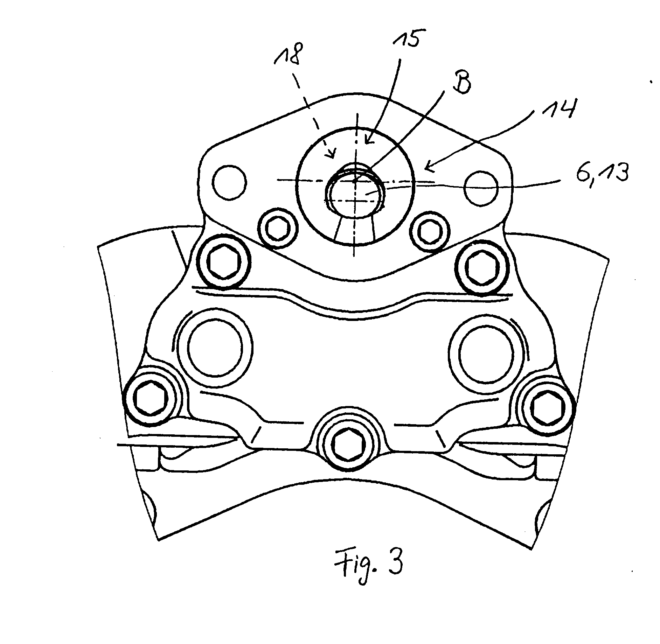

An seinem freien Ende weist der Schwenkhebel 6 einen Kopf mit einer vorzugsweise kalottenförmigen Ausnehmung 13 auf, die als Anlage für das Koppelglied zur Übertragung der Kraft von einem Pneumatikzylinder 16 auf den Schwenkhebel 6 dient. Das Koppelglied wird bei den dargestellten Ausführungsbeispielen von einer Kolbenstange 17 gebildet. Der Anlagebereich kann aber auch beliebig zur Krafteinleitung ausgebildet sein. Wie den Figuren 1 und 3 zu entnehmen ist, ist am Bremssattel 1 ein Befestigungsbereich 14 mit einer Sattelöffnung 15 vorgesehen, wobei die Sattelöffnung 15 eine Achse B hat, deren Lage so gewählt ist, daß der Kraftfluß vom am Befestigungsbereich 14 angeordneten Pneumatikzylinder 16 auf das freie Ende des Schwenkhebels 6 immer annähernd entlang der Achse B der Sattelöffnung 15 verläuft und annähernd senkrecht auf dem Schwenkhebel 6 steht. Der Befestigungsbereich 14 dient der Befestigung des Pneumatikzylinders 16 und des Bremssattels 1 aneinander.

Da die kraftübertragende Verbindung zwischen dem Pneumatikzylinder 16 und der Zuspanneinrichtung 5 über die Kolbenstange 17 erfolgt, kann der Pneumatikyzlinder 16 von einer annähernd parallelen bis zu einer annähernd senkrechten Position zur Bremsenachse bzw. zur Hauptebene 7 der Bremsscheibe 2 am Bremssattel direkt oder mittels eines Verlängerungsteils befestigt werden.

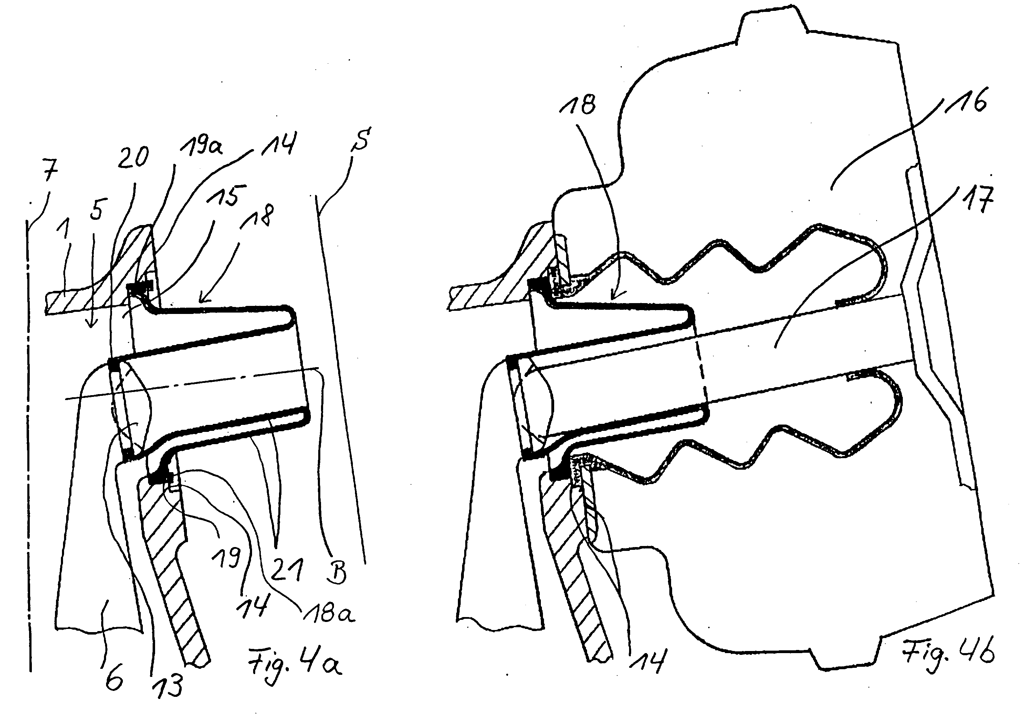

Wie bereits oben erwähnt, dient erfindungsgemäß eine Dichtung 18 zur Abdichtung des Ringraumes zwischen dem Schwenkhebel 6 einerseits und dem ihn umgebenden Teil des Bremssattels 1 andererseits. Die Figuren 4a bis 11 zeigen spezielle Ausführungen bzw. Anordnungen und Anbringungen von Dichtungen. Gegebenenfalls zeigen mit dem Buchstaben "a" gekennzeichnete Figuren die Bremse ohne Pneumatikzylinder, während der Buchstabe "b" Darstellungen der Bremse mit angebautem Pneumatikzylinder bezeichnet, die eine innere Dichtung im Pneumatikzylinder erkennen lassen, welche sich bis in den Befestigungsbereich 14 der Anlageflächen zwischen dem Bremssattel und dem Zylinder erstreckt.

Zur Befestigung der Dichtung 18 weist nach den Figuren 4a bis 11 die Sattelöffnung 15 zur Seite des Pneumatikzylinders 16 hin eine ringförmige Ausnehmung 19 auf, in der die jeweils in der Projektion ringförmige Dichtung 18 mit ihrem Außenrand 18a befestigt ist. Der Außenrand 18a erstreckt sich nach axial auswärts, also in Richtung des Pneumatikzylinders 16, mit mindestens einer zusätzlichen ringförmigen Dichtfläche 18b bis in den Befestigungsbereich 14 der Anlageflächen zwischen dem Bremssattel 1 und dem Pneumatikzylinder 16 hinein. Zur Verbesserung des Dichteffekts kann sich die Dichtfläche 18b noch zusätzlich in radialer Richtung erstrecken, wie dies in den Fig. 1, 7, 10 und 11 gezeigt ist. Durch die axiale Dichtfläche 18a und/oder die radiale Dichtfläche 18b wird zum bereits vorhandenen Dichtsystem des Pneumatikzylinders 16 ein zusätzlicher, der Bremsensicherheit dienender Dichteffekt zwischen den Anlageflächen erzielt, und ein Eindringen von Feuchtigkeit, Schmutz usw. von außen über den Kontaktbereichbremssattel 1/Pneumatikzylinder 16 wird zuverlässig verhindert. Andererseits ist am Innenrand der Dichtung 18 ein Haltebereich 20 vorgesehen, der bei den dargestellten Ausführungsbeispielen an dem Schwenkhebel 6, an der Kolbenstange 17 oder zwischen Anlageflächen der beiden genannten Elemente gehalten ist.

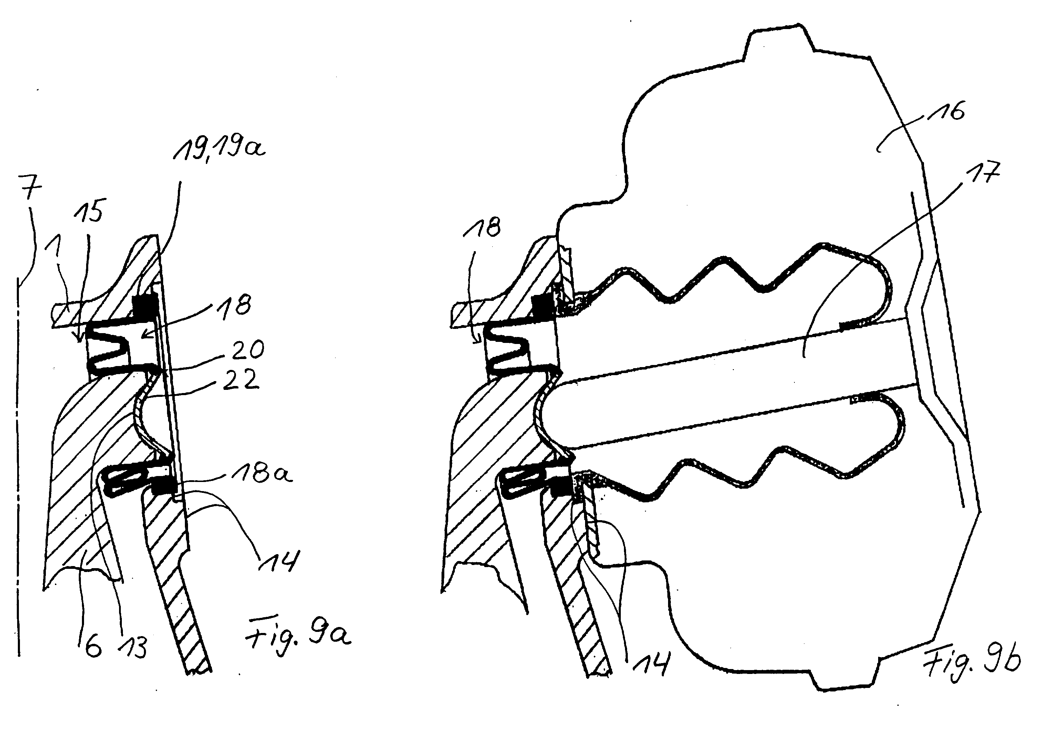

Zwischen dem Außen- und dem Innenrand der Dichtung 18 ist ein elastischer Zwischenbereich 21 vorgesehen, der mindestens so dimensioniert ist, daß er dem Verschiebeweg des Kopfes des Schwenkhebels 6 bzw. der Kolbenstange 17 entlang der Achse B bei einer Bremsbetätigung folgen kann. Dies zeigt in gestrichelter Darstellung die Position des Schwenkhebels 6 in den Figuren 1 und 7. Dabei ist nach den Figuren 4a bis 6b dieser elastische Zwischenbereich 21 als Rollbalg und nach Fig. 7 als Faltenmanschette ausgeführt. Der Zwischenbereich 21 kann jedoch beliebig gestaltet sein, wenn seine Elastizität es ermöglicht, dem Schwenkhebel 6 bzw. der Kolbenstange 17 bei deren Bewegung zu folgen.

Am Außenrand 18a der Dichtung 18 ist ein Metallring 19a derart eingebunden, daß ein Eindrücken in die ringförmige Ausnehmung 19 eine sichere Halterung und Abdichtung gewährleistet. Selbstverständlich kann auch jede andere Art der Befestigung gewählt werden, wenn dadurch die sichere Halterung und Abdichtung sichergestellt ist.

Nach den Figuren 8a bis 9b weist die als Rollbalg oder Faltenmanschette ausgeführte Dichtung 18 in ihrer Mitte eine Metallschale 22 auf, die in die Kalotte 13 oder eine gleichdienende Kontur des Schwenkhebels 6 bzw. der Kolbenstange 17 einlegbar ist und dort gehalten wird.

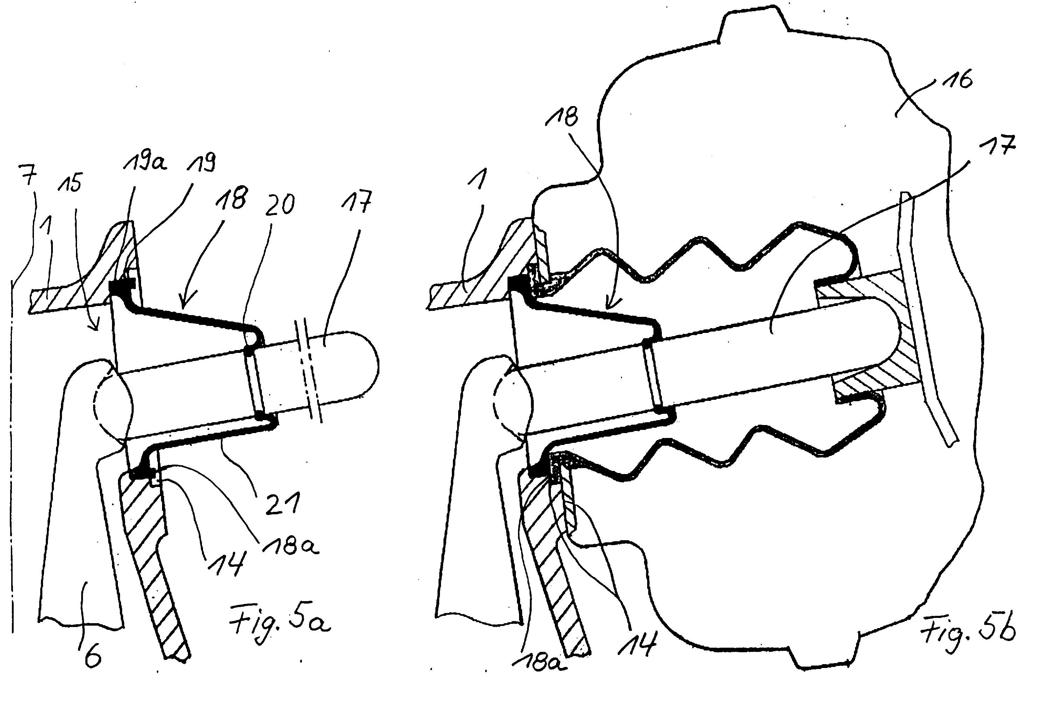

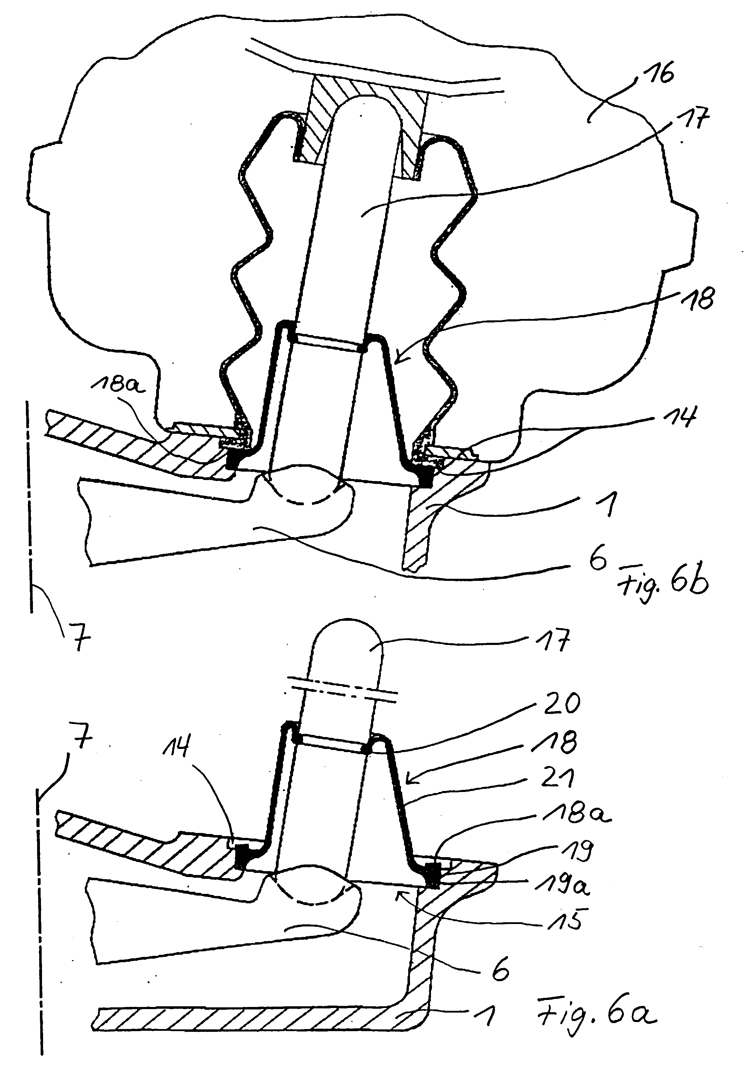

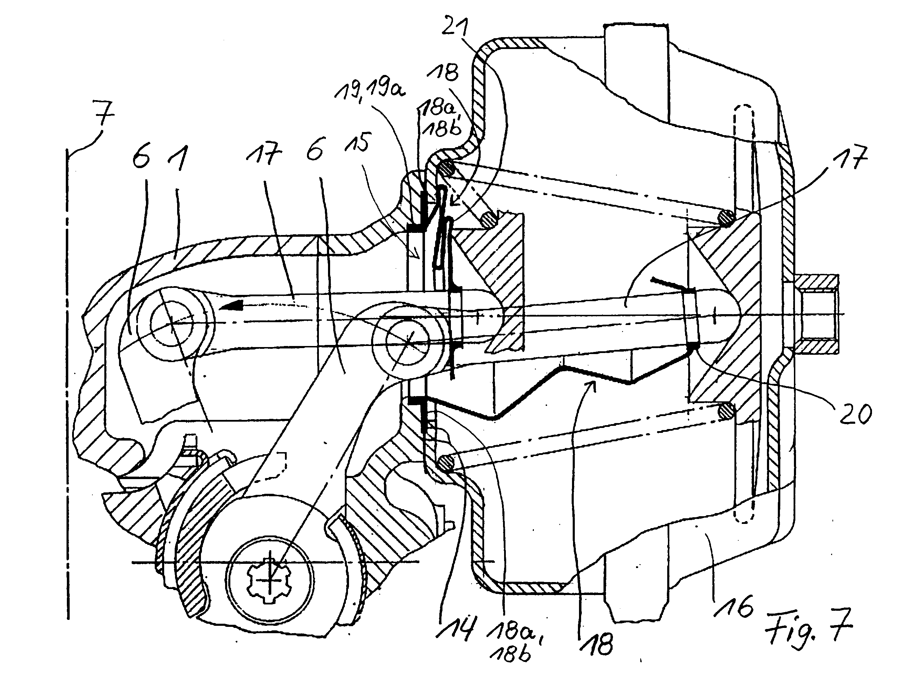

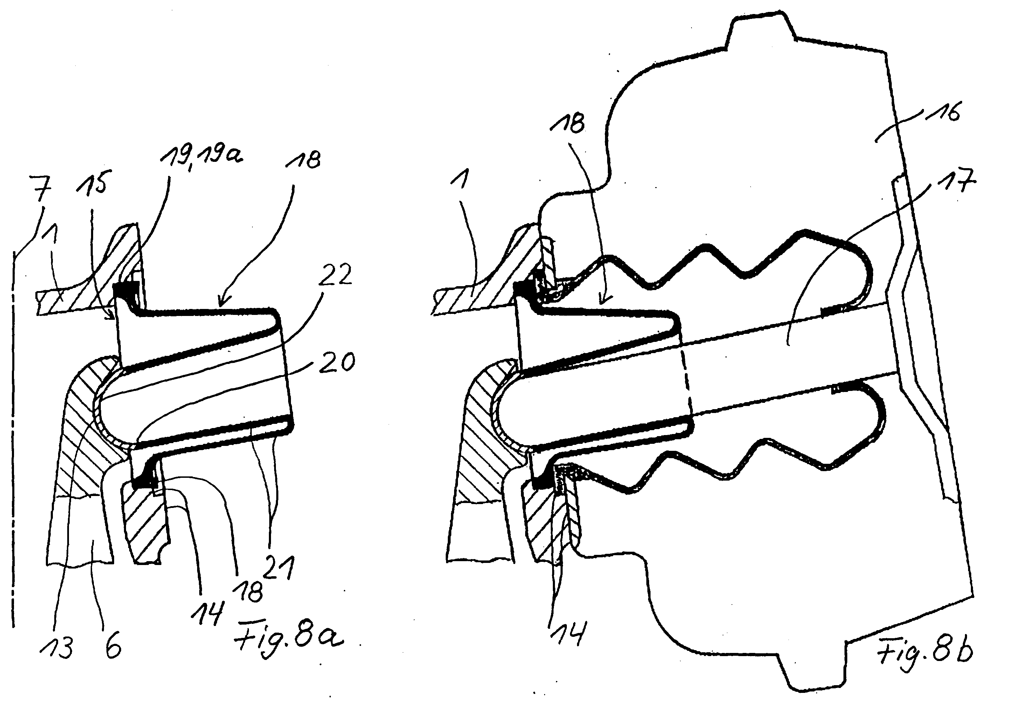

Nach den Figuren 5a bis 7 erstreckt sich die Dichtung 18 in der Ruhelage der Zuspanneinrichtung 5 nach außerhalb. Dies hat den Vorteil, daß keine Einbuchtungen im Bremssattelinnenraum vorhanden sind, in denen sich bei abgebautem Pneumatikzylinder 16 Schmutz, Wasser od. dgl. absetzen können. Diese Ausgestaltung ist dann besonders vorteilhaft, wenn sich die Kolbenstange 17 entlang der Achse B durch die Sattelöffnung 15 in Richtung des Pneumatikzylinders 16 erstreckt und mit dem Ende des Schwenkhebels 6 gekoppelt ist, wobei sie annähernd außerhalb des Bremssattels eine Befestigung 20 des Innenrandes der Dichtung 18 ermöglicht. Dadurch gibt es keine Einbuchtungen in der Dichtung 18, in der sich Schmutz, Wasser od. dgl. ansammeln können, wenn beispielsweise entsprechend den Figuren 6a, 6b der Pneumatikzylinder in einer zur Bremsenachse annähernd senkrechten Stellung am Bremssattel 1 befestigt ist. Wird der Pneumatikzylinder 16 bei dieser Anordnung ausgetauscht, was mit einem vorübergehenden Abbau des Pneumatikzylinders 16 verbunden ist, so wäre ohne die Dichtung 18 ein Eindringen von Schmutz, Feuchtigkeit od. dgl. durch die Sattelöffnung 15 in den ungeschützten Bremseninnenraum kaum vermeidbar.

Die Funktion der Dichtung 18 im montierten Zustand ist denkbar einfach. Da die Dichtung 18 einerseits nahe der Durchgangsöffnung 15 und andererseits an dem Schwenkhebel 6 bzw. der Kolbenstange 17 gehalten ist, und bei einer Bremsbetätigung der Kraftfluß von dem Pneumatikzylinder 16 auf die Zuspanneinrichtung 5 annäherend parallel der Achse B erfolgt, folgt die Dichtung 18 an ihrem Innenrand der Bewegung des Schwenkhebels 6 bzw. der Kolbenstange 17, indem sie sich je nach Gestaltung und Positionierung als Rollbalg ein- bzw. auswärts rollt und als Faltenmanschette zusammenzieht oder auseinanderstreckt.

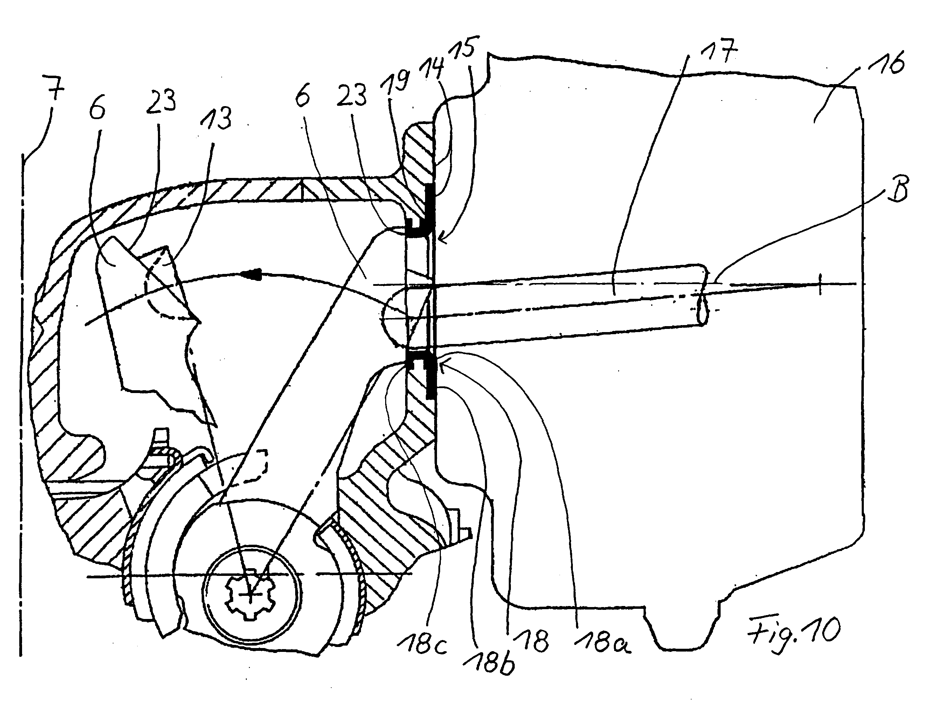

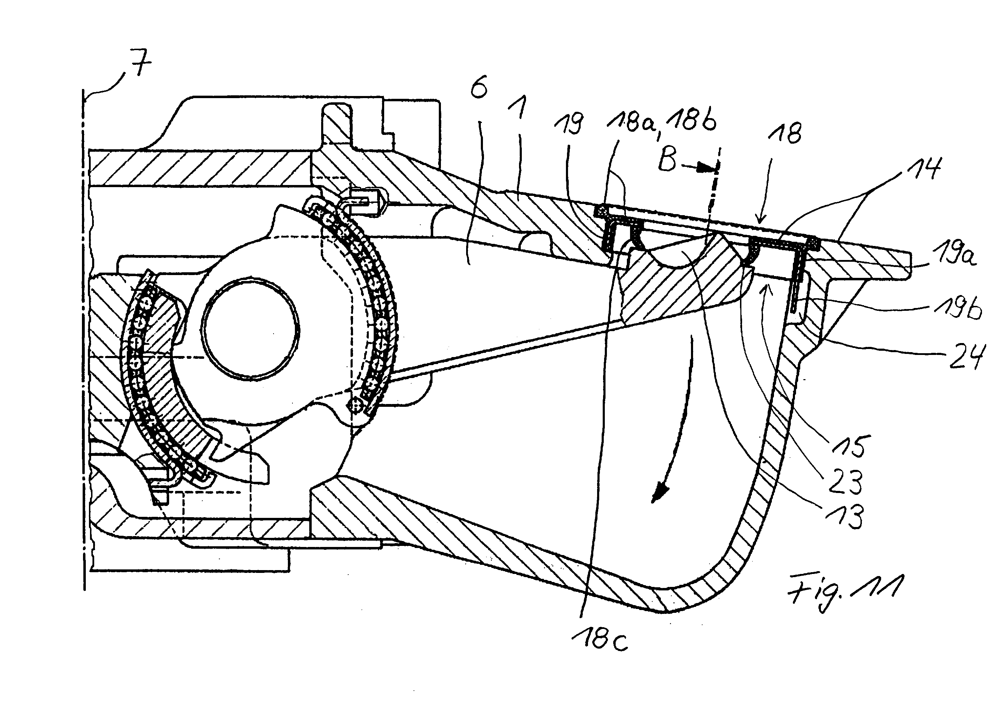

Die Fig. 10 und 11 zeigen Ausführungsbeispiele der Erfindung, bei denen die Dichtung 18 nur an dem Bremssattel 1, und zwar im Bereich der Sattelöffnung 15 befestigt ist. Auf eine Befestigung an dem Schwenkhebel 6 oder dem Koppelglied 17 ist verzichtet. In Fig. 10 entspricht der nach rechts geschwenkte Schwenkhebel 6 der Ruhestellung der Bremse. In Fig. 11 ist ebenfalls die Ruhestellung gezeigt. In dieser Ruhestellung liegt ein Abstreif- oder Anschlagbereich 23 des Schwenkhebels 6 an einer Anlagedichtfläche 18c an. Die Anlagedichtfläche 18c ist ringförmig ausgestaltet, wie der Abstreif- oder Anschlagbereich 23 auch. Dabei umläuft der Abstreif- oder Anschlagbereich 23 die Ausnehmung 13 an dem Schwenkhebel 6. Die Dichtung 18 ist im Bereich ihrer Anlagedichtfläche 18c bevorzugt elastisch ausgeführt, um eine vollflächige und dichtende Anlage sicherzustellen.

Der Haltering 19a dient der Halterung der Dichtung 18 in der Ausnehmung 19. Dabei ragt ein Positionieransatz 19b in eine Axialöffnung 24 in den Bremssattel 1 hinein. Dadurch kann die Dichtung 18 nur in einer einzigen Drehwinkelstellung um die Achse B der Sattelöffnung 15 eingebaut werden. Das ist im Hinblick darauf wichtig, daß wegen der mechanischen Gegebenheiten beim Verschwenken des Schwenkhebels 6 die Dichtung 18 bezüglich der Mittelachse B der Sattelöffnung 15 versetzt angeordnet ist, vgl. Fig. 11.

Der Abstreif- oder Anschlagbereich kann sowohl einzeln als auch in beliebigen Kombinationen mit anderen vorstehend beschriebenen Ausführungen der Dichtung vorgesehen sein, wobei er beispielsweise mit dem Innenumfang der anderen oben beschriebenen Dichtungsausführungen zusammenwirkt, wodurch eine zusätzliche Abdichtung erzielt wird.

Schließlich sei darauf hingewiesen, daß die Dichtung 18 insgesamt vorzugsweise aus einem Material bzw. aus Materialien hergestellt ist, das/die gegenüber äußeren Einflüssen unempfindlich ist/sind und somit einen Langzeitschutz darstellt/darstellen.

### BEZUGSZEICHENLISTE

- 1: Bremssattel
- 2: Bremsscheibe
- 3: Bremsbelag
- 4: Bremsbelag
- 5: Zuspanneinrichtung
- 6: Schwenkhebel
- 7: Hauptebene der Bremsscheibe
- 8: Zuspannwelle
- 9: Druckspindel
- 10: Druckspindel
- 11: Druckstück
- 12: Druckfeder
- 13: Ausnehmung
- 14: Befestigungsbereich
- 15: Sattelöffnung
- 16: Pneumatikzylinder
- 17: Kolbenstange
- 18: Dichtung
- 18a: axialer Dichtungsbereich
- 18b: radialer Dichtungsbereich
- 18c: Anlagedichtfläche
- 19: Ausnehmung
- 19a: Haltering
- 19b: Positionieransatz
- 20: Befestigungsbereich
- 21: Zwischenbereich
- 22: Metallschale
- 23: Abstreif- oder Anschlagbereich
- 24: Axialöffnung
- A: Schwenkachse
- B: Mittelachse der Sattelöffnung
- S: Schnittstelle zwischen der Zuspanneinrichtung 5 und der Betätigungseinrichtung 17

## Patentansprüche

1. Fluiddruck-betätigbare Scheibenbremse mit
a) einem Bremssattel (1), der mit seinen beiden Sattelschenkeln eine Bremsscheibe (2) und an die Bremsscheibe anlegbare Bremsbacken (3, 4) übergreift,
b) einer Zuspanneinrichtung (5) auf einer Seite der Bremsscheibe (2) mit einer Zuspannwelle (8), die im wesentlichen parallel zur Hauptebene (7) der Bremsscheibe (2) liegt und sich bremsscheibenabgewandt an dem Bremssattel (1) abstützt, während sie bremsscheibenzugewandt in Wirkverbindung mit einer Bremsbacke (3) steht, wobei sie eine Nockenkontur hat, die bei einem Verdrehen um ihre Längsachse zu einer Relativverschiebung von Bremssattel (1) und Bremsbacke (3) in Axialrichtung der Bremsscheibe (2) führt, und mit einem innerhalb des Bremssattels (1) angeordneten Bremshebel (6) sich radial von der Zuspannwelle (8) erstreckt, so daß die Bremse durch Verschwenken des Bremshebels (6) um eine parallel zur Hauptebene (7) der Bremsscheibe (2) liegende Schwenkachse (A) betätigt wird,
c) einer Betätigungseinrichtung mit einem Fluiddruckzylinder (16), der abnehmbar an dem Bremssattel (1) angebaut ist und dessen von seinem Betätigungshub herrührender Kraftfluß durch eine Sattelöffnung (15) hindurch den Schwenkhebel (6) betätigt, und
d) einem Koppelglied (17) zwischen dem Fluiddruckzylinder (16) und dem Schwenkhebel (6),
gekennzeichnet durch
eine Dichtung (18) zum zumindest im Ruhezustand der Bremse wirksamen Abdichten des von dem Schwenkhebel (6) einerseits und dem ihn umgebenden Teil des Bremssattels (1) andererseits gebildeten Ringraumes, die unabhängig von der Betätigungseinrichtung (16) an dem den Schwenkhebel (6) umgebenden Teil des Bremssattels (1) gehalten ist und im Ruhezustand der Bremse mit einer Anlagedichtfläche (18c) an einem Anschlagbereich (23) an dem Schwenkhebel (6) und/oder dem Koppelglied (17) anliegt.

2. Scheibenbremse nach Anspruch 1, dadurch gekennzeichnet, daß die Dichtung (18) am Umfang der Sattelöffnung (15) gehalten ist.

3. Scheibenbremse nach Anspruch 2, dadurch gekennzeichnet, daß am Außenrand der Dichtung (18) ein Haltering (19a) angebracht ist, der in eine entsprechende Ausnehmung (19) am Umfang der Sattelöffnung (15) eingedrückt ist.

4. Scheibenbremse nach einem der vorangehenden Ansprüche, dadurch gekennzeichnet, daß sich die Dichtung (18) im wesentlichen parallel zur Mittelachse (B) der Sattelöffnung (15) erstreckt.

5. Scheibenbremse nach einem der vorangehenden Ansprüche, dadurch gekennzeichnet, daß die Dichtung (18) an dem Bremssattel (1) befestigt ist und mindestens einen Bereich (18a, 18b) hat, der sich in einen Befestigungsbereich (14) erstreckt, in dem der Bremssattel (1) und der Fluiddruckzylinder (16) aneinander befestigt sind, und der zum Abdichten des Befestigungsbereiches (14) dient.

6. Scheibenbremse nach Anspruch 5, dadurch gekennzeichnet, daß sich der sich in den Befestigungsbereich (14) erstreckende Bereich (18a, 18b) der Dichtung (18) in Richtung der Mittelachse (B) der Sattelöffnung (15) (18a) und/oder quer dazu (18b) erstreckt.

7. Scheibenbremse nach Anspruch 5 oder 6, dadurch gekennzeichnet, daß der sich in den Befestigungsbereich (14) erstreckende Bereich (18a, 18b) bezüglich der Mittelachse (B) der Sattelöffnung (15) versetzt angeordnet ist.

8. Scheibenbremse nach Anspruch 7, gekennzeichnet durch eine Einrichtung (19b, 24), die einen Anbau der Dichtung (18) nur in der korrekten Drehwinkelstellung bezüglich der Mittelachse (B) der Sattelöffnung (15) ermöglicht.

9. Fluiddruck-betätigbare Scheibenbremse mit
a) einem Bremssattel (1), der mit seinen beiden Sattelschenkeln eine Bremsscheibe (2) und an die Bremsscheibe anlegbare Bremsbacken (3, 4) übergreift,
b) einer Zuspanneinrichtung (5) auf einer Seite der Bremsscheibe (2) mit einer Zuspannwelle (8), die im wesentlichen parallel zur Hauptebene (7) der Bremsscheibe (2) liegt und sich bremsscheibenabgewandt an dem Bremssattel (1) abstützt, während sie bremsscheibenzugewandt in Wirkverbindung mit einer Bremsbacke (3) steht, wobei sie eine Nockenkontur hat, die bei einem Verdrehen um ihre Längsachse zu einer Relativverschiebung von Bremssattel (1) und Bremsbacke (3) in Axialrichtung der Bremsscheibe (2) führt, und mit einem innerhalb des Bremssattels (1) angeordneten Bremshebel (6) sich radial von der Zuspannwelle (8) erstreckt, so daß die Bremse durch Verschwenken des Bremshebels (6) um eine parallel zur Hauptebene (7) der Bremsscheibe (2) liegende Schwenkachse (A) betätigt wird,
c) einer Betätigungseinrichtung mit einem Fluiddruckzylinder (16), der abnehmbar an dem Bremssattel (1) angebaut ist und dessen von seinem Betätigungshub herrührender Kraftfluß durch eine Sattelöffnung (15) hindurch den Schwenkhebel (6) betätigt, und
d) einem Koppelglied (17) zwischen dem Fluiddruckzylinder (16) und dem Schwenkhebel (6),
gekennzeichnet durch
eine Dichtung (18) zum zumindest im Ruhezustand der Bremse wirksamen Abdichten des von dem Schwenkhebel (6) einerseits und dem ihn umgebenden Teil des Bremssattels (1) andererseits gebildeten Ringraumes, die unabhängig von der Betätigungseinrichtung (16) an dem Schwenkhebel (6) und/oder an dem Koppelglied (17) gehalten ist und im Ruhezustand der Bremse mit einer Anlagedichtfläche an einem Anschlagbereich an dem Bremssattel (1) anliegt.

10. Scheibenbremse nach Anspruch 9, dadurch gekennzeichnet, daß die Dichtung (18) an dem Schwenkhebel (6) und/oder dem Koppelglied (17) an einer Stelle gehalten ist, die im Ruhezustand der Bremse nahe an der Sattelöffnung (15) liegt.

11. Scheibenbremse nach Anspruch 9 oder 10, dadurch gekennzeichnet, daß die Halterung der Dichtung (18) eine Schale (22) aufweist, die an einer entsprechenden Kontur des Schwenkhebels (6) und/oder des Koppelgliedes (17) anliegt.

12. Scheibenbremse nach einem der vorangehenden Ansprüche, dadurch gekennzeichnet, daß die Dichtung (18) elastisches Material aufweist.

13. Scheibenbremse nach einem der vorangehenden Ansprüche, dadurch gekennzeichnet, daß die Dichtung (18) einen Rollbalg oder eine Faltenmanschette aufweist.

14. Scheibenbremse nach einem der vorangehenden Ansprüche, dadurch gekennzeichnet, daß sich die Dichtung (18) nach außerhalb erstreckt, wenn die Zuspanneinrichtung (5) nicht betätigt ist.

15. Scheibenbremse nach einem der vorangehenden Ansprüche, dadurch gekennzeichnet, daß die Längsachse des Koppelgliedes (17) und die Mittelachse (B) der Sattelöffnung (15) im wesentlichen parallel zueinander liegen und im gesamten Schwenkbereich des Schwenkhebels (6) annähernd senkrecht auf dem Schwenkhebel (6) stehen.

16. Scheibenbremse nach einem der vorangehenden Ansprüche, dadurch gekennzeichnet, daß die Anlagedichtfläche (18c) bezüglich der Mittelachse (B) der Sattelöffnung (15) versetzt angeordnet ist.

## Claims

1. Fluid Pressure Actuated Disc Brake with
a) a Brake caliper (1) which with both caliper halves reaches over brake pads (3,4) and a brake disc (2),
b) a clamping unit (5) on one side of the brake disc (2) with a clamping shaft (8) positioned parallel to the centerline (7) of the brake disc (2) self anchoring against the brake caliper (1) away from the brake disc, whereby the side facing the brake disc is connected to a brake pad / backing plate assembly (3) via a cam which during axial rotation causes the caliper (1) and brake pad (3) to move in axial direction towards the brake disc (2) and with the brake lever (6) located within the caliper radially to the clamping shaft (8), so that the brake upon movement of the brake lever (6) is being actuated around a swing axis (A) parallel to the centerline (7) of the brake disc (2),
c) a actuation unit with a fluid pressurised cylinder (16) which is mounted removable directly to the caliper in the caliper housing, and caliper (1) and which torque, generated by the piston stroke, actuates the swing arm lever (6) through an opening (15)
d) a coupling link (17) between the fluid pressurised cylinder (16) and the swing arm lever (6),
characterised by
a seal (18) which, when the brake is in the neutral position, serves to protect the open space around the swing arm lever (6) within the caliper (1) and, independent of the actuation unit (16) is held in position in the space surrounding the swing arm lever (6) within the caliper (1) and which abuts against a sealing surface (18c) and a mating abutment (23) on the swing arm lever (6) and / or the coupling link (17).

2. Disc brake according to claim 1, characterised by the seal (18) being secured via the circumference of the opening (15) in the caliper.

3. Disc brake according to claim 2, characterised by the outer edge of the seal (18) being equipped with a hold down ring (19a) which is being pressed into a corresponding groove (19) machined into the opening (15) in the caliper.

4. Disc brake according to one of the above claims, characterised by the seal (18) being positioned parallel to the centerline (B) of the opening (15) within the caliper.

5. Disc brake according to one of the above claims, characterised by the seal (18) being fixed to the caliper and having a minimum of one section (18a, 18b) which reaches into the area (14) where the fluid pressurised cylinder (16) is mounted to the caliper (1) serving to seal the cylinder mounting area (14).

6. Disc brake according to claim 5, characterised by sections (18a, 18b) of the seal (18) which reach into the mounting area (14) being positioned in direction of the caliper opening (15) centerline (B) (18a) and / or in transverse direction (18b).

7. Disc brake according to claim 5 or 6, characterised by the seal sections (18a, 18b) reaching into the cylinder mounting area (14) being positioned offset relative to the centerline (B) of the caliper opening (15).

8. Disc brake according to claim 7, characterised by a fixture (19b, 24) which allows installation of the seal (18) only in the correct angle position relative to the centerline (B) of the caliper opening (15).

9. Fluid pressure actuated disc brake with
a) a brake caliper (1) which with both caliper halves reaches over brake pads (3,4) and a brake disc (2)
b) a clamping unit (5) on one side of the brake disc (2) with a clamping shaft (8) positioned parallel to the centerline (7) of the brake disc (2) self anchoring against the caliper (1) away from the brake disc, whereby the side facing the brake disc is connected to a brake pad / backing plate assembly (3) via a cam which during axial rotation causes the caliper (1) and brake pad (3) to move in axial direction towards the brake disc (2) and with the brake lever (6) located within the caliper radially to the clamping shaft (8), so that the brake upon movement of the brake lever (6) is being actuated around a swing axis (A) parallel to the centerline (7) of the brake disc (2),
c) a actuation unit with a fluid pressurised cylinder (16) which is mounted removable directly to the caliper (1) and which torque, generated by the piston stroke, actuates the swing arm lever (6) through an opening (15) in the caliper housing, and
d) a coupling link (17) between the fluid pressurised cylinder (16) and the swing arm lever (6),
characterised by
a seal (18) which, when the brake is in the neutral position, serves to protect the open space around the swing arm lever (6) within the caliper (1) and, independent of the actuation unit (16) is held in position in the space surrounding the swing arm lever (6) and / or the coupling link (17) abutting against a corresponding sealing surface of the caliper (1).

10. Disc brake according to claim 9, characterised by the seal (18) being held in place in an area of the swing arm lever (6) and / or the coupling link (17) which is close to the caliper opening (15) when the brake is in the neutral position.

11. Disc brake according to claim 9 or 10, characterised by the seal mounting being formed in a bowl shape (22) which abuts against a corresponding contour of the swing arm lever (6) and / or the coupling link (17).

12. Disc brake according to one of the above claims, characterised by the seal (18) exhibiting a certain amount of elasticity.

13. Disc brake according to one of the above claims, characterised by the seal (18) incorporating a roll bellows or a pleated sleeve.

14. Disc brake according to one of the above claims, characterised by the seal (18) stretching outward when the clamping unit (5) is not being actuated.

15. Disc brake according to one of the above claims, characterised by the longidutional axis of the coupling link (17) and the centerline of the caliper opening (15) are arranged parallel to each other and are positioned vertically on the swing arm lever (6) during it's entire travel.

16. Disc Brake according to one of the above claims, characterised by the sealing surface (18c) being positioned offset relative to the centerline (B) of the caliper opening (15).

## Revendications

1. Frein à disque actionné par l'intermédiaire d'un fluide sous pression avec
a) un étrier de frein (1) dont les deux demi-étriers chevauchent un disque de frein (2) avec des segments de frein (3, 4) venant en appui contre les faces du disque de frein (2),
b) un mécanisme d'actionnement (5) placé d'un côté du disque de frein (2) avec un arbre d'actionnement (8) se situant essentiellement dans un plan parallèle au plan principal (7) du disque de frein (2) et prenant appui, du côté opposé au disque de frein (2), contre l'étrier de frein (1) alors que, vers le disque de frein (2), il se trouve en combinaison d'action avec le segment de frein (3), et disposant d'un profil de came qui conduit, lorsqu'il tourne autour de son axe longitudinal, à un déplacement relatif de l'étrier de frein (1) et du segment de frein (3) le long de l'axe du disque de frein (2), et avec un levier de frein (6) placé à l'intérieur de l'étrier de frein (1) faisant saillie radialement à l'arbre d'actionnement (8) permettant l'actionnement du frein lorsque le levier de frein (6) pivote autour d'un axe (A) parallèle au plan principal (7) du disque de frein (2),
c) un dispositif d'actionnement avec un cylindre à pression de fluide (16) qui est rapporté à l'étrier de frein (1) et démontable, et dont le flux de puissance provenant de sa course utile vient actionner le levier basculant (6) à travers une ouverture (15) de l'étrier de frein, et
d) une pièce de couplage (17) placée entre le cylindre à pression de fluide (16) et le levier basculant (6),
caractérisé par
un joint (18) servant, au moins au repos, à assurer efficacement l'étanchéité de l'espace annulaire entre le levier basculant (6) d'une part et la partie de l'étrier de frein (1) qui l'entoure d'autre part, le joint étant fixé, indépendamment du dispositif d'actionnement (16), à la partie de l'étrier de frein (1) entourant le levier basculant (6) et reposant, lorsque le frein est au repos, par une surface de contact (18c) sur une zone de butée (23) du levier basculant (6) et/ou de la pièce de couplage (17).

2. Frein à disque selon la revendication 1, caractérisé en ce que le joint (18) est fixé sur la périphérie de l'ouverture (15) de l'étrier.

3. Frein à disque selon la revendication 2, caractérisé en ce que le rebord extérieur du joint (18) comporte une bague de maintien (19a) qui est montée en force dans un lamage (19) correspondant sur la périphérie de l'ouverture (15) de l'étrier.

4. Frein à disque selon l'une quelconque des revendications précédentes, caractérisé en ce que le joint (18) est disposé essentiellement le long d'un axe parallèle à l'axe médian (B) de l'ouverture (15) de l'étrier.

5. Frein à disque selon l'une quelconque des revendications précédentes, caractérisé en ce que le joint (18) est fixé à l'étrier de frein (1) et possède au moins une zone (18a, 18b) qui s'étend dans une zone de fixation (14) au niveau de laquelle l'étrier de frein (1) et le cylindre à pression de fluide (16) sont assemblés l'un à l'autre, et qui sert à rendre étanche la zone de fixation (14).

6. Frein à disque selon la revendication 5, caractérisé en ce que la zone (18a, 18b) du joint (18) qui s'étend dans la zone de fixation (14) se déploie le long de l'axe médian (B) de l'ouverture (15) de l'étrier (18a ) et/ou perpendiculairement à cet axe (18b).

7. Frein à disque selon l'une des revendications 5 ou 6, caractérisé en ce que la zone (18a, 18b) du joint (18) qui s'étend dans la zone de fixation (14) est décalée par rapport à l'axe médian (B) de l'ouverture (15) de l'étrier.

8. Frein à disque selon la revendication 7, caractérisé par un dispositif (19b, 24) qui ne rend possible le montage du joint (18) que dans la position angulaire correcte par rapport à l'axe médian (B) de l'ouverture (15) de l'étrier.

9. Frein à disque actionné par l'intermédiaire d'un fluide sous pression avec
a) un étrier de frein (1) dont les deux demi-étriers chevauchent un disque de frein (2) avec des segments de frein (3, 4) venant en appui contre les faces du disque de frein (2),
b) un mécanisme d'actionnement (5) placé d'un côté du disque de frein (2) avec un arbre d'actionnement (8) se situant essentiellement dans un plan parallèle au plan principal (7) du disque de frein (2) et prenant appui, du côté opposé au disque de frein (2), contre l'étrier de frein (1) alors que, vers le disque de frein (2), il se trouve en combinaison d'action avec le segment de frein (3), et disposant d'un profil de came qui conduit, lorsqu'il tourne autour de son axe longitudinal, à un déplacement relatif de l'étrier de frein (1) et du segment de frein (3) le long de l'axe du disque de frein (2), et avec un levier de frein (6) placé à l'intérieur de l'étrier de frein (1) faisant saillie radialement à l'arbre d'actionnement (8) permettant l'actionnement du frein lorsque le levier de frein (6) pivote autour d'un axe (A) parallèle au plan principal (7) du disque de frein (2),
c) un dispositif d'actionnement avec un cylindre à pression de fluide (16) qui est rapporté à l'étrier de frein (1) et démontable, et dont le flux de puissance provenant de sa course utile vient actionner le levier basculant (6) à travers une ouverture (15) de l'étrier de frein, et
d) une pièce de couplage (17) placée entre le cylindre à pression de fluide (16) et le levier basculant (6),
caractérisé par
un joint (18) servant, au moins au repos, à assurer efficacement l'étanchéité de l'espace annulaire entre le levier basculant (6) d'une part et la partie de l'étrier de frein (1) qui l'entoure d'autre part, le joint étant fixé, indépendamment du dispositif d'actionnement (16), au levier basculant (6) et/ou à la pièce de couplage (17) et reposant, lorsque le frein est au repos, par une surface de contact sur une zone de butée de l'étrier de frein (1)

10. Frein à disque selon la revendication 9, caractérisé en ce que le joint (18) au niveau du levier basculant (6) et/ou de la pièce de couplage (17) est fixé à un endroit proche de l'ouverture (15) de l'étrier lorsque le frein est au repos.

11. Frein à disque selon l'une des revendications 9 ou 10, caractérisé en ce que le point d'attache du joint (18) possède une coquille (22) qui repose sur un profil correspondant du levier basculant (6) et/ou de la pièce de couplage (17).

12. Frein à disque selon l'une quelconque des revendications précédentes, caractérisé en ce que le joint (18) possède une matière élastique.

13. Frein à disque selon l'une quelconque des revendications précédentes, caractérisé en ce que le joint (18) possède une gaine déroulante ou un manchon à soufflets.

14. Frein à disque selon l'une quelconque des revendications précédentes, caractérisé en ce que le joint (18) se déploie vers l'extérieur lorsque le mécanisme (5) n'est pas actionné.

15. Frein à disque selon l'une quelconque des revendications précédentes, caractérisé en ce que l'axe longitudinal de la pièce de couplage (17) et l'axe médian (B) de l'ouverture (15) de l'étrier sont essentiellement parallèles l'un à l'autre et sont pratiquement perpendiculaires au levier basculant (6) dans l'ensemble de la zone de basculement du levier (6).

16. Frein à disque selon l'une quelconque des revendications précédentes, caractérisé en ce que la surface de contact (18c) est désaxée par rapport à l'axe médian (B) de l'ouverture (15) de l'étrier.
